# DEMANDE DE BREVET EUROPEEN

(11) **EP 1 055 551 A1**
(43) Date de publication de la demande: **29.11.2000**
(21) Numéro de dépôt: 00440161.8
(22) Date de dépôt: 26.05.2000
(51) Int. Cl.: B60N 2/22, B60N 2/36

(54) **Dispositif de réglage et de verrouillage en position d'un dossier inclinable d'une banquette d'un véhicule**

(30) Priorité: 27.05.1999 FR 9906913
(71) Demandeur: M.G.I. Coutier S.A., 01410 Champfromier (FR)
(72) Inventeur: Kippelen, Stéphane, 68330 Huningue (FR)
(74) Mandataire: Nithardt, Roland

(57) **Abrégé**

La présente invention concerne un dispositif de réglage et de verrouillage en position d'un dossier inclinable d'une banquette qui est pratique, qui permet de régler et de verrouiller facilement et sans effort le dossier dans une position angulaire quelconque désirée et confortable pour l'utilisateur, choisie dans une plage continue de positions angulaires.

Ce dispositif de verrouillage est caractérisé en ce qu'il comporte un moteur d'entraînement (33) couplé à une vis sans fin (27) par un engrenage (34) et un écrou libre (26) couplé à un coulisseau (18) portant une gâche (17). Cet écrou libre (26) se déplace de façon rectiligne sur la vis sans fin (27) et entraîne en déplacement ledit coulisseau (18) le long d'un rail de guidage (23) lorsque la vis sans fin (27) tourne sur elle-même, et bloque le coulisseau (18) par rapport audit rail de guidage (23) lorsque la vis sans fin (27) ne tourne pas sur elle-même.

## Description

La présente invention concerne un dispositif de réglage et de verrouillage en position d'un dossier inclinable d'une banquette d'un véhicule, notamment d'un véhicule routier, ladite banquette étant supportée par des éléments de carrosserie du véhicule, le dispositif de réglage et verrouillage comportant au moins un organe de retenue monté mobile sur un support lié rigidement auxdits éléments de carrosserie du véhicule et un mécanisme de commande couplé audit organe de retenue, ledit dossier étant pourvu d'au moins un organe de verrouillage agencé pour être en prise avec ledit organe de retenue et ledit mécanisme de commande étant agencé pour entraîner en déplacement ledit organe de retenue sur ledit support et pour bloquer en position ledit organe de retenue par rapport audit support, le support comportant un rail de guidage ayant un profil ouvert définissant une rainure longitudinale, l'organe de retenue faisant saillie dudit rail de guidage à travers ladite rainure longitudinale et étant lié rigidement à un coulisseau monté dans ce rail de guidage et agencé pour coulisser dans celui-ci, et le coulisseau étant couplé audit mécanisme de commande.

On connaît déjà des dispositifs de réglage et de verrouillage du type tel que défini ci-dessus, qui permettent de régler et de verrouiller un dossier inclinable d'une banquette d'un véhicule dans plusieurs positions angulaires, tels que le dispositif décrit dans la demande de brevet d'invention français publiée sous le numéro FR-A-2 710 883. Dans ce dispositif, un axe de retenue est fixé à un coulisseau monté coulissant dans le support lié rigidement aux éléments de carrosserie du véhicule. Le support comprend un organe de blocage du coulisseau par rapport au support. L'organe de blocage est monté pivotant autour d'un axe fixe porté par le support. Il comporte des dents agencées pour s'engager, sous l'effet de la poussée d'un ressort de rappel monté en tension entre le support et l'organe de blocage, dans des encoches ménagées dans le coulisseau. Cet agencement permet d'immobiliser l'axe de retenue dans différentes positions prédéterminées le long du support. Le dossier inclinable est pourvu d'un crochet de verrouillage agencé pour être en prise avec l'axe de retenue mobile. L'organe de blocage est asservi à un organe de manoeuvre articulé au siège de la banquette et couplé par un câble de liaison à l'organe de blocage.

Ce dispositif de réglage et de verrouillage présente divers inconvénients. Le verrouillage du dossier inclinable de la banquette n'est possible que dans certaines positions angulaires prédéterminées et limitées. L'utilisateur ne peut pas vraiment régler à sa guise l'inclinaison du dossier et peut trouver ces positions prédéfinies inconfortables. En outre, le dispositif de verrouillage n'est pas pratique car l'utilisateur doit, tout en manoeuvrant le dispositif, fournir un effort pour déplacer angulairement le dossier inclinable. Cette opération est délicate et il est difficile de parvenir à verrouiller le dossier dans la position de réglage souhaitée.

On connaît également de par la publication allemande DE 196 29 964 un mécanisme d'entraînement d'un dossier de siège permettant de l'incliner dans une plage angulaire continue. Ce mécanisme comporte un moteur, une vis sans fin et un réducteur par étage d'engrenages, logés dans un boîtier solidaire de la carrosserie. Le réducteur engrène une crémaillère solidaire du dossier et associée à un verrou. Dans cette réalisation, c'est l'ensemble verrou/crémaillère qui se déplace suivant un arc de cercle à lanière du dossier. Ce dispositif nécessite, par conséquent, un volume libre important pour permettre le débattement angulaire de l'ensemble verrou/crémaillère. De plus, le fil de gâche saillant à l'arrière du dossier, le verrou et la crémaillère sont visibles, ce qui n'est pas esthétique et peut être dangereux.

Enfin, il est décrit dans le certificat d'utilité allemand DE 296 14 633 un mécanisme d'entraînement permettant d'incliner un dossier de siège soit par une broche crantée, soit par une vis sans fin dont l'extrémité est couplée à un coulisseau qui se déplace dans une rainure en arc de cercle solidaire de la carrosserie, ce coulisseau étant verrouillé au dossier. Ce mécanisme semble relativement complexe et encombrant puisque la transmission du mouvement s'effectue dans l'axe de la broche ou de la vis et que le système vis-écrou n'est pas intégré à la glissière.

Le but de la présente invention est de pallier ces inconvénients en fournissant un dispositif de réglage et de verrouillage en position d'un dossier inclinable d'une banquette qui est pratique, qui permet de régler et de verrouiller facilement et sans effort le dossier dans une position angulaire quelconque désirée et confortable pour l'utilisateur, choisie dans une plage continue de positions angulaires, et qui permet de simplifier sa construction et de réduire son encombrement total.

Ce but est atteint par le dispositif tel que décrit en préambule et caractérisé en ce que son mécanisme de commande comprend un écrou libre monté sur une vis sans fin supportée par ledit support, ledit écrou libre étant couplé audit coulisseau de sorte que l'écrou libre se déplace de façon rectiligne sur la vis sans fin et entraîne en déplacement ledit coulisseau le long du rail de guidage lorsque la vis sans fin tourne sur elle-même, et bloque le coulisseau par rapport audit rail de guidage lorsque la vis sans fin ne tourne pas sur elle-même.

Le mécanisme de commande peut comprendre un moteur d'entraînement couplé à ladite vis sans fin par un ensemble de transmission de puissance.

Par ailleurs, le mécanisme de commande comprend avantageusement un système d'asservissement agencé pour transmettre des signaux de commande audit moteur d'entraînement.

De préférence, le coulisseau et le rail de guidage ont des formes et des dimensions agencées pour que ledit coulisseau se déplace le long dudit rail de guidage selon une trajectoire sensiblement en arc de cercle centré sur l'axe de rotation du dossier, l'écrou libre comporte un élément de couplage coopérant avec un élément de couplage du coulisseau, lesdits éléments de couplage étant agencés pour permettre l'entraînement du coulisseau selon ladite trajectoire sensiblement en arc de cercle par ledit écrou libre ayant un déplacement rectiligne sur la vis sans fin.

L'écrou libre peut, par exemple, comporter un axe de couplage guidé dans un trou oblong ménagé sur ledit coulisseau.

Dans la forme de réalisation préférée, le coulisseau comporte une garniture réalisée dans une matière ayant un faible coefficient de frottement pour limiter l'usure et le bruit.

La présente invention et ses avantages apparaîtront mieux dans la description suivante d'un mode de réalisation de l'invention, donné à titre d'exemple non limitatif, en référence aux dessins annexés, dans lesquels:
- la figure 1 est une vue arrière en perspective d'une partie d'une banquette d'un véhicule, dont le dossier inclinable est pourvu du dispositif de l'invention;
- la figure 2 est une vue d'ensemble en perspective du dispositif de la figure 1;
- la figure 3 est une vue en perspective de l'organe de retenue mobile du dispositif de la figure 2; et
- la figure 4 est une vue arrière en perspective de l'organe de retenue mobile de la figure 3.

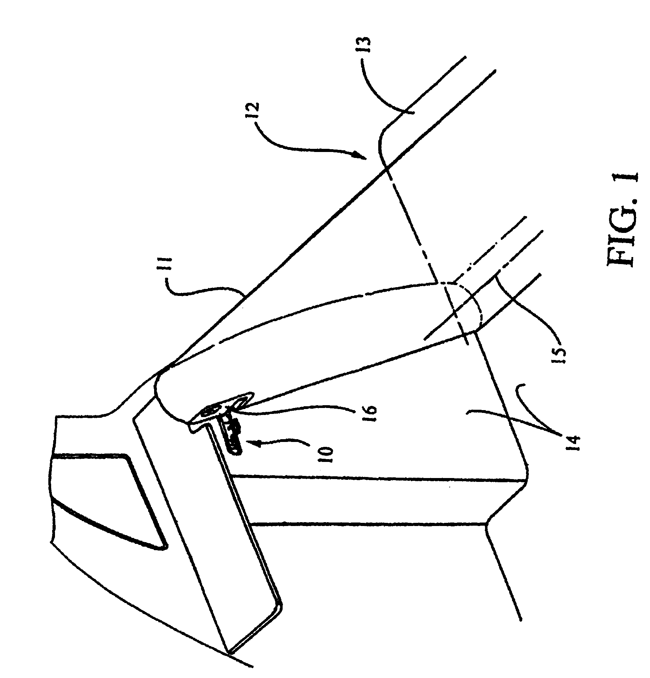

En référence à la figure 1, le dispositif de réglage et de verrouillage 10 de l'invention équipe un dossier inclinable 11 d'une banquette 12 d'un véhicule, telle que la banquette arrière d'un véhicule routier par exemple. La banquette 12 comporte un siège 13 et est supportée par des éléments de carrosserie 14 du véhicule. Le dossier 11 est monobloc, par exemple, et est agencé pour pivoter autour d'un axe de rotation 15 fixe par rapport aux éléments de carrosserie 14.

Le dossier 11 comporte à ses deux faces latérales, deux organes de verrouillage 16, tels que des verrous conventionnels connus de l'homme du métier, dont un seul est représenté. Chaque verrou 16 est disposé dans une partie supérieure du dossier 11. Le dispositif de réglage et de verrouillage 10, correspondant au verrou 16 représenté, est monté sur les éléments de carrosserie 14. Il est agencé pour coopérer avec le verrou 16 de manière à verrouiller en position le dossier inclinable 11 par rapport aux éléments de carrosserie 14 du véhicule. Les deux verrous 16 et les deux dispositifs de réglage et de verrouillage 10 correspondants sont disposés sensiblement éloignés de l'axe de rotation 15, pour un meilleur ancrage des deux extrémités du dossier 11 sur les éléments de carrosserie 14 et une plus grande sécurité, en particulier lors d'un choc violent.

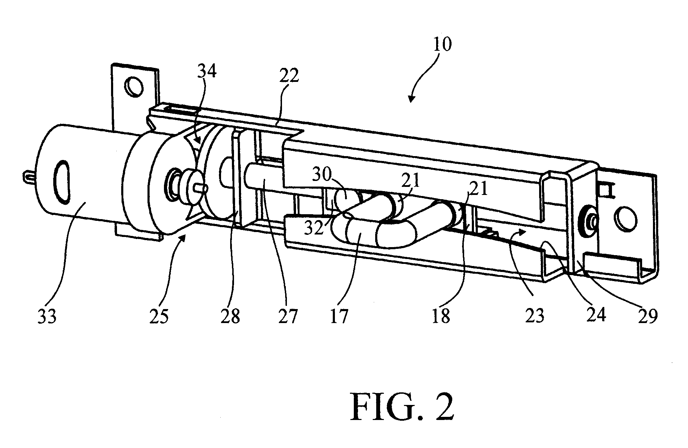

En référence aux figures 2 à 4, le dispositif de réglage et de verrouillage 10 comprend un organe de retenue 17, tel qu'une gâche fil, de section sensiblement cylindrique et ayant une forme générale en U. Cette gâche 17 est agencée pour être en prise avec le verrou 16 du dossier 11 (représenté sur la figure 1). La gâche 17 est liée rigidement à un coulisseau 18, qui a une forme allongée et une section transversale en forme approximativement de U. Le coulisseau 18 et la gâche 17 sont réalisés en une matière ayant une bonne résistance mécanique, telle que de l'acier forgé par exemple. Ils peuvent former une seule pièce.

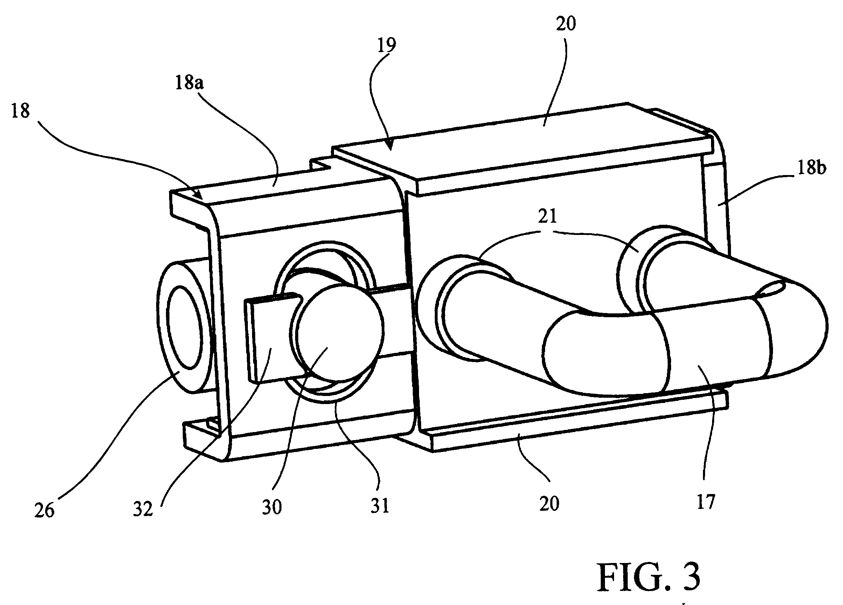

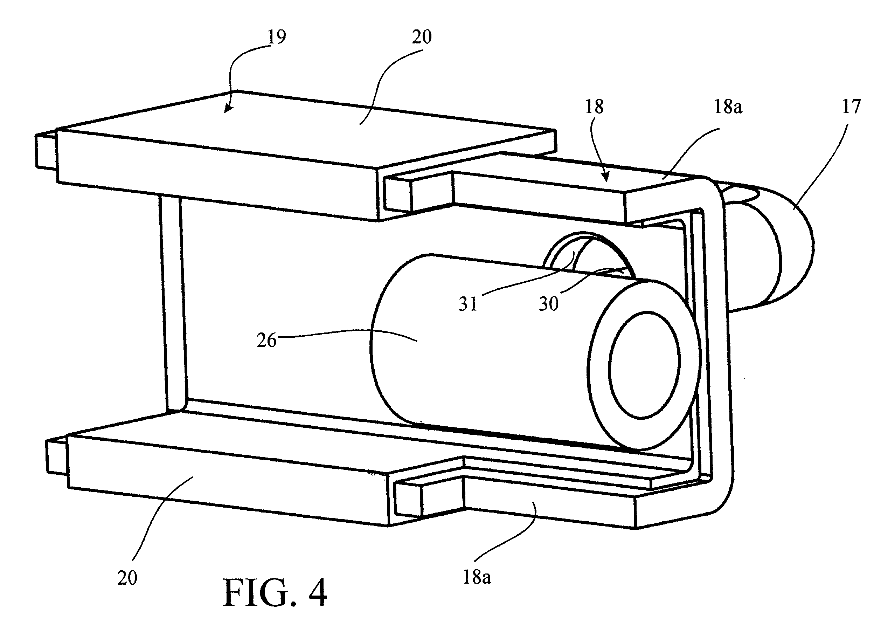

Selon une forme de réalisation préférée, mieux représentée par les figures 3 et 4, le coulisseau 18 comporte un corps 18a en une matière ayant une résistance mécanique élevée, telle que de l'acier par exemple, et une garniture 19 surmoulée sur le corps 18a, en une matière ayant un faible coefficient de frottement, telle qu'une matière synthétique thermoformable par exemple. La garniture 19 forme un patin 20 sur une grande partie du corps 18a et deux manchons 21 tubulaires, sensiblement cylindriques, disposés autour des deux tronçons d'extrémités de la gâche 17 reliés au coulisseau 18.

Le dispositif de réglage et de verrouillage 10 comprend un support 22 en métal par exemple, lié rigidement, vissé par exemple, sur les éléments de carrosserie 14 du véhicule. Ce support 22 comporte un rail de guidage 23 ayant un profil ouvert en forme sensiblement de C définissant une rainure longitudinale 24, du côté correspondant au dossier 11. Le coulisseau 18 de la gâche 17 est monté mobile dans le rail de guidage 23 et est agencé pour coulisser dans celui-ci. La gâche 17 fait saillie du rail de guidage 23 à travers la rainure longitudinale 24 en direction du dossier 11.

Le coulisseau 18 et le rail de guidage 23 ont des formes et des dimensions agencées pour que le coulisseau 18 se déplace le long du rail de guidage 23 selon une trajectoire sensiblement en arc de cercle centré sur l'axe de rotation 15 du dossier 11. A cet effet, le rail de guidage 23 est sensiblement rectiligne et la rainure longitudinale 24 est incurvée sensiblement en arc cercle centré sur cet axe de rotation 15 par exemple. La largeur de la rainure longitudinale 24 est sensiblement égale au diamètre des manchons 21 du coulisseau 18 de sorte qu'ils sont guidés selon la direction approximativement verticale par la rainure longitudinale 24. La profondeur du rail de guidage 23 est sensiblement égale à la largeur du coulisseau 18, de sorte qu'il est guidé transversalement par ledit rail de guidage 23. La hauteur du rail de guidage 23 est supérieure à la hauteur du coulisseau 18, définissant un jeu entre les faces supérieure et inférieure du coulisseau 18 et les faces supérieure et inférieure correspondantes du rail de guidage 23, de manière à permettre au coulisseau 18 de se déplacer sensiblement verticalement par rapport au rail de guidage 23 rectiligne quand il coulisse le long de celui-ci.

La garniture 19 en matière synthétique à faible coefficient de frottement, formant le patin 20 et les deux manchons 21 du coulisseau 18, permet au coulisseau 18 de coulisser sensiblement sans frottements et sans bruit dans le rail de guidage 23 métallique. Le corps 18a en acier assure, par ailleurs, une très bonne résistance mécanique du coulisseau 18.

Le dispositif de réglage et de verrouillage 10 comprend un mécanisme de commande 25 du déplacement de la gâche mobile 17. Le mécanisme 25 est agencé pour entraîner en déplacement la gâche mobile 17 le long du rail de guidage 23 du support 22. Le mécanisme 25 est également agencé pour bloquer la gâche mobile 17 par rapport au support 22, dans une position quelconque le long du rail de guidage 23.

Le mécanisme de commande 25 comporte un écrou libre 26 monté sur une vis sans fin 27, qui est supportée par deux paliers 28 et 29 du support 22, disposés de part et d'autre du rail de guidage 23 dans son prolongement. Elle s'étend dans le rail de guidage 23 derrière le coulisseau 18 de la gâche 17, dans l'espace défini par la paroi du fond du rail de guidage 23 et le profil en forme de U du coulisseau 18. L'écrou libre 26 est couplé au coulisseau 18 de sorte que l'écrou libre 26 se déplace de façon rectiligne sur la vis sans fin 27 et entraîne en déplacement le coulisseau 18 le long du rail de guidage 23, selon la trajectoire sensiblement en arc de cercle centré sur l'axe de rotation 15 du dossier 11 décrite précédemment, lorsque la vis sans fin 27 tourne sur elle-même. L'écrou libre 26 permet également de bloquer le coulisseau 18 de la gâche mobile 17 dans une position quelconque le long du rail de guidage 23 lorsque la vis sans fin 27 ne tourne pas.

L'écrou libre 26 comporte un élément de couplage 30, tel qu'un axe sensiblement cylindrique par exemple, coopérant avec un élément de couplage 31 complémentaire, tel qu'un trou oblong par exemple, prévu dans le coulisseau 18, de manière à permettre le déplacement selon la trajectoire sensiblement en arc de cercle du coulisseau 18 quand l'écrou libre 26 se déplace de façon rectiligne. L'axe 30 est maintenu dans le trou oblong 31 par un organe de maintien 32, tel qu'une clavette par exemple.

La vis sans fin 27 est couplée, à son extrémité du côté correspondant au palier 28, à un moteur d'entraînement 33, tel qu'un moteur électrique par exemple, par l'intermédiaire d'un ensemble de transmission de puissance 34, tel qu'un ensemble à engrenages par exemple. Le moteur électrique 33 entraîne en rotation, par l'intermédiaire de l'ensemble à engrenages 34, la vis sans fin 27, qui entraîne en déplacement le coulisseau 18 de la gâche 17 le long du rail de guidage 23, par l'intermédiaire de l'écrou libre 26. Il est à noter que le moteur électrique 33 peut tourner indifféremment dans un sens de rotation ou dans l'autre, ce qui permet de choisir le sens de déplacement de la gâche 17 par rapport au support 22, c'est-à-dire vers l'avant ou vers l'arrière du support 22.

Le mécanisme de commande 25 comprend également un système d'asservissement (non représenté) agencé pour transmettre des signaux de commande au moteur 33. Le système d'asservissement peut comporter un commutateur placé au niveau du siège 13 de la banquette 12. Le commutateur est agencé pour générer les signaux de commande au moteur 33 sous l'impulsion d'un utilisateur. Ce commutateur peut être un commutateur à trois positions à rappel élastique, à savoir une position neutre automatique, et une position avance et une position recul obtenues par une impulsion de l'utilisateur sur le commutateur. La position neutre correspond à l'arrêt du moteur électrique 33 et donc au blocage de la gâche 17 par rapport au support 22. Les positions avance et recul du commutateur correspondent à une rotation du moteur électrique dans un premier sens de rotation de sorte que la gâche 17 se déplace vers l'avant du support 22, et dans un second sens de rotation, inverse du premier sens de rotation, de sorte que la gâche 17 se déplace vers l'arrière du rail de guidage 23.

Il est important de préciser que les deux dispositifs de réglage et de verrouillage 10, coopérant avec les deux verrous 16 disposés aux deux extrémités du dossier inclinable 11, fonctionnent de préférence simultanément et de façon équilibrée, de manière à éviter une torsion du dossier 11, lorsque les deux verrous 16 sont en prise avec les deux gâches 17 correspondantes. A cet effet, les moteurs électriques 33 des deux dispositifs de réglage et de verrouillage 10 sont commandés par le même système d'asservissement. Ce dernier peut comporter plusieurs commutateurs disposés à des endroits différents sur la banquette 12 ou dans l'habitacle du véhicule pour rendre plus pratique et agréable l'utilisation des dispositifs de réglage et de verrouillage 10 de l'invention.

Il est à noter que le dispositif de réglage et de verrouillage 10 permet de rabattre complètement le dossier 11 vers l'avant, en désaccouplant les verrous 16 des gâches 17 correspondantes par exemple au moyen de poignées appropriées.

Le dispositif de réglage et de verrouillage 10 de l'invention est de manière évidente adapté à une banquette comportant un dossier inclinable en deux parties, du type "2/3, 1/3" par exemple. Chacun des deux dossiers inclinables comporte alors un verrou 16 du côté correspondant aux éléments de carrosserie 14 du véhicule et coopérant avec un dispositif de réglage et de verrouillage 10 monté sur les éléments de carrosserie 14 tel que décrit précédemment. Les deux dossiers peuvent alors être inclinés ou rabattus indépendamment l'un de l'autre.

Le dispositif de réglage et de verrouillage 10 est très pratique. Il permet, sans effort et par simple impulsion de l'utilisateur sur le commutateur de commande placé au niveau du siège 13 de la banquette 12, de modifier automatiquement, de manière linéaire et continue, la position de la gâche mobile 17, et donc la position angulaire du dossier inclinable 11, quand le verrou 16 est en prise avec la gâche 17. D'autre part, il permet de bloquer automatiquement en position la gâche 17 sur le support 22, en relâchant simplement le commutateur. Ceci permet de verrouiller en position le dossier inclinable 11, quand le verrou 16 est en prise avec la gâche 17, de façon sûre dans une position angulaire quelconque confortable pour l'utilisateur, choisie dans une plage continue de positions angulaires. Le dispositif de verrouillage permet notamment de rabattre complètement le dossier de la banquette vers l'avant. Il est très bien adapté à un dossier en deux parties. Il offre un volume de coffre et un espace utilisateur modulable. Enfin, le verrou du siège est un verrou conventionnel. Le dispositif de verrouillage de l'invention propose une solution technique adaptée aux exigences actuelles des utilisateurs et des industriels, en particulier dans le domaine de l'automobile, et notamment en ce qui concerne le blocage mécanique du dossier inclinable 11 en cas de chocs violents.

De plus, dans le dispositif selon l'invention, la transmission du mouvement s'effectue à angle droit permettant de simplifier le mécanisme et de réduire son encombrement total. L'ensemble du mécanisme étant compact et logé dans un boîtier solidaire de la carrosserie, il ne laisse apparaître aucune partie saillante pouvant s'avérer dangereuse et inesthétique.

La présente invention n'est pas limitée au mode de réalisation décrit précédemment, mais s'étend à toutes modifications et variantes évidentes pour l'homme du métier. En particulier, le rail de guidage 23 peut être incurvé en arc de cercle centré sur l'axe de rotation 15 du dossier 11, le coulisseau pouvant également être incurvé en arc de cercle. Le mécanisme de commande 25 du déplacement du coulisseau 18 de la gâche 17 peut être différent. Par exemple, le coulisseau 18 peut comporter une crémaillère couplée au moteur d'entraînement par un ensemble à engrenages.

## Revendications

1. Dispositif de réglage et de verrouillage en position d'un dossier (11) inclinable d'une banquette (12) d'un véhicule, notamment d'un véhicule routier, ladite banquette étant supportée par des éléments de carrosserie (14) du véhicule, le dispositif de réglage et de verrouillage (10) comportant au moins un organe de retenue (17) monté mobile sur un support (22) lié rigidement auxdits éléments de carrosserie du véhicule et un mécanisme de commande (25) couplé audit organe de retenue (17), ledit dossier (11) étant pourvu d'au moins un organe de verrouillage (16) agencé pour être en prise avec ledit organe de retenue et ledit mécanisme de commande (25) étant agencé pour entraîner en déplacement ledit organe de retenue (17) sur ledit support (22) et pour bloquer en position ledit organe de retenue (17) par rapport audit support (22), le support (22) comportant un rail de guidage (23) ayant un profil ouvert définissant une rainure longitudinale (24), l'organe de retenue (17) faisant saillie dudit rail de guidage (23) à travers ladite rainure longitudinale (24) et étant lié rigidement à un coulisseau (18) monté dans ce rail de guidage (23) et agencé pour coulisser dans celui-ci, et le coulisseau (18) étant couplé audit mécanisme de commande (25), caractérisé en ce que ce mécanisme de commande (25) comprend un écrou libre (26) monté sur une vis sans fin (27) supportée par ledit support (22), ledit écrou libre (26) étant couplé audit coulisseau (18) de sorte que l'écrou libre (26) se déplace de façon rectiligne sur la vis sans fin (27) et entraîne en déplacement ledit coulisseau (18) le long du rail de guidage (23) lorsque la vis sans fin (27) tourne sur elle-même, et bloque le coulisseau (18) par rapport audit rail de guidage (23) lorsque la vis sans fin (27) ne tourne pas sur elle-même.

2. Dispositif de verrouillage selon la revendication 1, caractérisé on ce que ledit mécanisme de commande (25) comprend un moteur d'entraînement (33) couplé à ladite vis sans fin (27) par un ensemble de transmission de puissance (34).

3. Dispositif de verrouillage selon la revendication 2, caractérisé en ce que ledit mécanisme de commande (25) comprend un système d'asservissement agencé pour transmettre des signaux de commande audit moteur d'entraînement (33).

4. Dispositif de commande selon la revendication 1, associé à un dossier (11) agencé pour pivoter autour d'un axe de rotation fixe (15) par rapport auxdits éléments de carrosserie (14) du véhicule, caractérisé en ce que ledit coulisseau (18) et ledit rail de guidage (23) ont des formes et des dimensions agencées pour que ledit coulisseau (18) se déplace le long dudit rail de guidage (23) selon une trajectoire sensiblement en arc de cercle centré sur l'axe de rotation (15) du dossier (11), en ce que l'écrou libre (26) comporte un élément de couplage (30) coopérant avec un élément de couplage (31) du coulisseau (18), lesdits éléments de couplage (30, 31) étant agencés pour permettre l'entraînement du coulisseau (18) selon ladite trajectoire sensiblement en arc de cercle par ledit écrou libre (26) ayant un déplacement rectiligne sur la vis sans fin (27).

5. Dispositif selon la revendication 4, caractérisé en ce que ledit écrou libre (26) comporte un axe de couplage (30) guidé dans un trou oblong (31) ménagé sur ledit coulisseau (18).

6. Dispositif selon l'une quelconque des revendications précédentes, caractérisé en ce que le coulisseau (18) comporte une garniture (19) réalisée dans une matière ayant un faible coefficient de frottement.
